# FASCICULE DE BREVET EUROPEEN

(11) **EP 1 764 483 B1**
(45) Date de publication et mention de la délivrance du brevet: **09.06.2010**
(21) Numéro de dépôt: 06119496.5
(22) Date de dépôt: 24.08.2006
(51) Int. Cl.: F01D 17/16, F16C 33/04

(54) **Douille pour pivot d'aube à angle de calage variable pour turbomachine, aubage statorique, compresseur et turbomachine associés**
Buchse für die Drehschaft einer verstellbaren Statorschaufel einer Turbomaschine, und entsprechende Statorbeschaufelung, Verdichter, und Turbomaschine
Bushing for the pivot of a variable pitch vane of a turbomachine, and corresponding stator blading, compressor and turbomachine

(30) Priorité: 14.09.2005 FR 0509378
(43) Date de publication de la demande: 21.03.2007
(73) Titulaire: SNECMA, 75015 Paris (FR)
(72) Inventeur: Bouru, Michel, 77950 Montereau sur le Jard (FR)
(74) Mandataire: Boura, Olivier

(56) Documents cités:
- EP-A- 1 205 638
- FR-A- 2 846 384
- FR-A- 2 856 750
- GB-A- 755 527
- US-A1- 2002 154 991

## Description

### Arrière-plan de l'invention

La présente invention se rapporte au domaine général des aubes à angle de calage variable pour turbomachine, et plus particulièrement aux douilles pour les pivots de guidage de ces aubes.

Le compresseur à haute pression d'une turbomachine à turbine à gaz se compose typiquement de plusieurs étages circulaires d'aubes dont l'orientation peut être réglée afin de modifier les caractéristiques d'écoulement des gaz selon les régimes de fonctionnement de la turbomachine. Ces aubes sont appelées aubes à angle de calage variable.

Les aubes à angle de calage variable d'un même étage comportent chacune un pivot de commande en tête et un pivot de guidage en pied. Le pivot de commande traverse une enveloppe de stator de la turbomachine et coopère avec un organe de commande. A partir d'une action sur cet organe de commande, il est possible de modifier l'orientation des aubes de l'étage concerné. Quant au pivot de guidage des aubes, il est mobile dans une douille montée dans un évidement correspondant d'un anneau intérieur de la turbomachine centré sur l'axe longitudinal de cette dernière.

Lors du montage des aubes sur l'anneau intérieur, il est important d'assurer un centrage optimum des pivots de guidage des aubes. Ce centrage est obtenu en faisant en sorte que les douilles et les évidements de l'anneau intérieur dans lesquels sont montées les douilles soient parfaitement concentriques. La qualité de ce centrage des aubes doit par ailleurs être maintenue quelle que soit la phase de fonctionnement de la turbomachine.

Or, les montages connus de douilles sur l'anneau intérieur ne comportent aucun aménagement particulier pour assurer le maintien de la qualité de centrage. Le centrage des pivots de guidage des aubes a donc tendance à perdre de son efficacité en fonctionnement, notamment lorsque les douilles de support pivotant et l'anneau intérieur sont réalisés dans des matériaux ayant des coefficients de dilatation thermique différents.

Le document EP1205638 constitue l'état de la technique antérieure le plus proche et divulgue les caractéristiques du préambule de la revendication 1.

### Objet et résumé de l'invention

La présente invention a donc pour but principal de pallier de tels inconvénients en proposant une douille apte à assurer une qualité permanente de centrage des pivots de guidage des aubes, quelle que soit la phase de fonctionnement de la turbomachine et indépendamment des matériaux utilisés pour réaliser la douille et l'anneau intérieur dans laquelle celle-ci est montée.

A cet effet, il est prévu une douille pour pivot d'aube à angle de calage variable pour turbomachine, la douille étant destinée à être montée dans un évidement d'un anneau de la turbomachine de forme sensiblement complémentaire à celle de la douille et comportant un corps sensiblement tubulaire d'axe longitudinal, caractérisée en ce que le corps tubulaire de la douille est muni à une extrémité d'une première collerette conique et à une extrémité opposée d'une seconde collerette conique, les surfaces coniques définies par la première et la seconde collerettes étant disposées en regard l'une de l'autre.

Le centrage des pivots de guidage des aubes est ainsi assurée par une liaison biconique entre la douille et l'évidement de l'anneau dans laquelle est elle montée. Grâce à une telle liaison, tout mouvement en écart de dilatation en diamètre de l'anneau par rapport à la douille est compensé par l'écart de dilatation en hauteur de l'anneau. Aussi, la position de contact des surfaces coniques définies par les collerettes reste permanente quelle que soit la dilatation de la douille et de l'anneau. En d'autres termes, les extrémités de la douille munies de collerettes coniques remplissent une fonction de restitution équivalente de déplacement. Ainsi, la qualité de centrage des pivots de guidage des aubes reste permanente.

Selon une caractéristique particulière de l'invention, l'angle d'inclinaison de la surface conique définie par la première collerette est sensiblement identique à celui de la surface conique définie par la seconde collerette. En outre, l'angle d'inclinaison des surfaces coniques définies par les collerettes est compris entre 30° et 60°, et il est de préférence de 45°. Dans ce cas, le diamètre moyen des collerettes est sensiblement identique à la distance longitudinale les séparant.

Selon une autre caractéristique particulière de l'invention, la douille comporte en outre des moyens pour assurer son anti-rotation dans l'évidement de l'anneau.

De tels moyens d'anti-rotation peuvent se présenter sous la forme d'au moins une protubérance prévue sur le corps tubulaire de la douille entre les collerettes, la protubérance définissant une surface sensiblement plane qui est destinée à coopérer avec une surface complémentaire de l'évidement de l'anneau dans laquelle la douille est destinée à être montée.

Alternativement, l'une des collerettes peut présenter au moins une excroissance externe sensiblement longitudinale destinée à coopérer avec un organe d'anti-rotation de la douille dans l'évidement de l'anneau.

Selon une autre alternative, l'une des collerettes d'une douille peut comporter une platine d'anti-rotation munie d'au moins une surface qui est destinée à établir un contact sensiblement plan avec une surface correspondante d'une platine d'anti-rotation d'une douille adjacente.

Le corps tubulaire et l'une des collerettes coniques de la douille peuvent être deux pièces distinctes de façon à permettre le montage de la douille dans son évidement.

Selon encore une autre caractéristique particulière de l'invention, la douille peut être réalisée dans un matériau ayant un coefficient de dilatation thermique différent de celui de l'anneau dans lequel elle est destinée à être montée.

L'invention a également pour objet un anneau de turbomachine comportant une pluralité d'évidements destinés chacun à recevoir le pivot de guidage d'une aube à angle de calage variable, l'anneau comportant en outre une pluralité de douilles telles que définies précédemment.

L'invention a encore pour objet un compresseur de turbomachine et une turbomachine comportant au moins un anneau tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe d'une douille selon l'invention dans son environnement ;
- la figure 2 est une vue en éclaté et en perspective de la douille de la figure 1 ;
- les figures 3A et 3B sont des vues partielles de douilles selon des variantes de réalisation de l'invention ;
- la figure 4 est une vue en perspective d'une douille selon l'invention munie de moyens d'anti-rotation ;
- les figures 5 à 8 sont des vues en perspective d'un anneau partiel muni de douilles selon d'autres variantes de réalisation de l'invention.

### Description détaillée d'un mode de réalisation

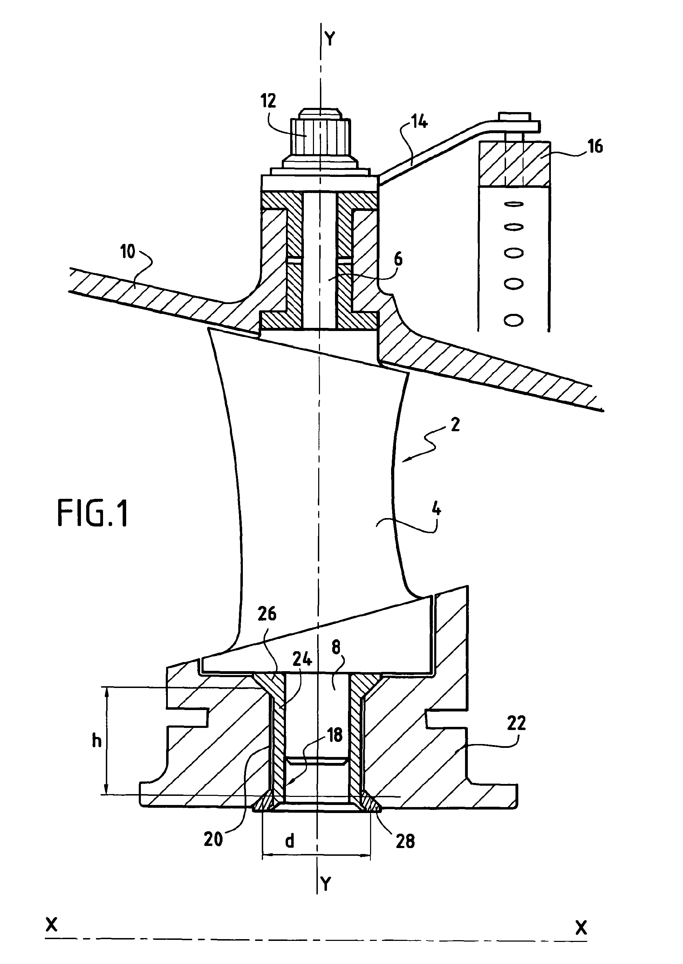

En liaison avec la figure 1, les aubes 2 à angle de calage variable du compresseur haute-pression de la turbomachine sont réparties en étages circulaires centrés sur l'axe longitudinal X-X de la turbomachine et disposés entre des étages d'aubes mobiles (non représentées) qui sont fixées sur un rotor de la turbomachine.

Chaque aube 2 à angle de calage variable d'un étage circulaire s'étend selon un axe principal Y-Y qui possède une direction radiale par rapport à l'axe longitudinal X-X de la turbomachine. L'aube 2 se présente sous la forme d'une pale 4 se terminant à une extrémité radiale externe (ou tête d'aube) par un pivot de commande 6 (ou pivot supérieur) et à une extrémité radiale interne (ou pied d'aube) par un pivot de guidage 8 (ou pivot inférieur).

Le pivot de commande 6 de l'aube 2 à angle de calage variable, centré sur son axe principal Y-Y, traverse une enveloppe annulaire 10 de stator de la turbomachine et coopère avec un organe de commande de l'orientation des aubes. Plus précisément, le pivot de commande 6 des aubes 2 fait saillie radialement vers l'extérieur de l'enveloppe 10 de stator et se termine par une tête 12 sur laquelle est engagée une extrémité de bielle de commande 14 dont l'autre extrémité coopère avec un anneau de commande 16 centré sur l'axe longitudinal X-X de la turbomachine.

Les bielles 14 et l'anneau 16 de commande forment l'organe de commande de l'orientation des aubes. La rotation de l'anneau de commande 16 autour de l'axe longitudinal X-X de la turbomachine permet en effet de faire tourner les bielles de commande 14 et ainsi de modifier simultanément l'orientation de toutes les aubes 2 à calage variable d'un même étage du compresseur haute-pression.

Le pivot de guidage 8 de l'aube 2 à angle de calage variable, centré sur son axe principal Y-Y, est destiné à pivoter à l'intérieur d'une douille creuse 18.

Chaque douille 18 est montée dans un évidement 20 formé dans un anneau intérieur 22 du compresseur haute-pression de la turbomachine qui est centré sur l'axe longitudinal X-X de la turbomachine, la douille et l'évidement étant de formes sensiblement complémentaires.

Par ailleurs, une douille supplémentaire (non représentée sur les figures) formant frette peut être montée serrée autour de chaque pivot de guidage 8 des aubes 2. Une telle douille supplémentaire, par exemple de forme sensiblement cylindrique, vient s'interposer entre le pivot de guidage des aubes et la douille. Elle a pour fonction d'éviter toute usure prématurée de la douille.

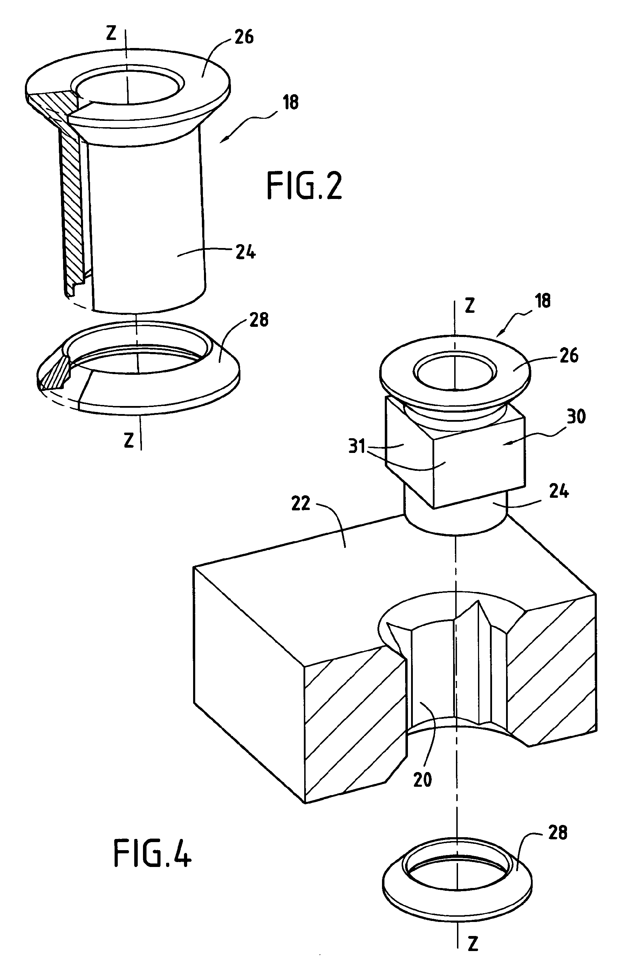

Comme illustré sur la figure 2, la douille 18 présente un corps sensiblement tubulaire 24 d'axe longitudinal Z-Z qui est destiné à recevoir le pivot de guidage 8 de l'aube.

Selon l'invention, le corps tubulaire 24 de la douille 18 est muni à une extrémité d'une première collerette (ou épaulement) conique 26 et à une extrémité opposée d'une seconde collerette conique 28, les surfaces coniques respectives définies par la première et la seconde collerettes étant disposées en regard l'une de l'autre (c'est-à-dire qu'elles se font face).

Les collerettes coniques 26, 28 font ainsi saillies radialement vers l'extérieur du corps tubulaire 24 par rapport à l'axe longitudinal Z-Z de ce dernier. Les collerettes coniques 26, 28 présentent un diamètre moyen d sensiblement identique et la hauteur longitudinale moyenne les séparant est notée h.

Comme expliqué précédemment, l'évidement 20 dans lequel est montée la douille 18 est de forme sensiblement complémentaire à cette dernière, c'est-à-dire qu'il présente un alésage central pour le passage du corps tubulaire 24 de la douille et deux surfaces coniques sur lesquelles sont en appui les collerettes coniques de la douille.

La douille 18 selon l'invention et l'anneau intérieur 22 dans lequel la douille est destinée à être montée peuvent être réalisés dans des matériaux ayant des coefficients de dilatation thermique différents. A titre d'exemple, la douille peut être réalisée en acier et l'anneau intérieur en aluminium.

Afin de permettre le montage de la douille 18 dans son évidement de l'anneau, le corps tubulaire 24 de la douille et l'une des collerettes coniques peuvent être deux pièces distinctes comme représenté sur les figures 1 et 2 (sur ces figures, la collerette distincte est la seconde collerette 28). Dans ce cas, une fois le corps tubulaire 24 de la douille monté dans son évidement, la collerette est assemblée autour du corps tubulaire puis fixée sur celui-ci par tout moyen approprié (sertissage, soudage, boulonnage, etc.).

Les angles d'inclinaison des surfaces coniques définies respectivement par la première collerette 26 et la seconde collerette 28 sont sensiblement identiques. Cet angle d'inclinaison, qui est mesuré par rapport à un plan transversal du corps tubulaire de la douille (c'est-à-dire par rapport à un plan perpendiculaire à l'axe longitudinal de celle-ci), est avantageusement compris entre 30° et 60°, et il est de préférence de 45°.

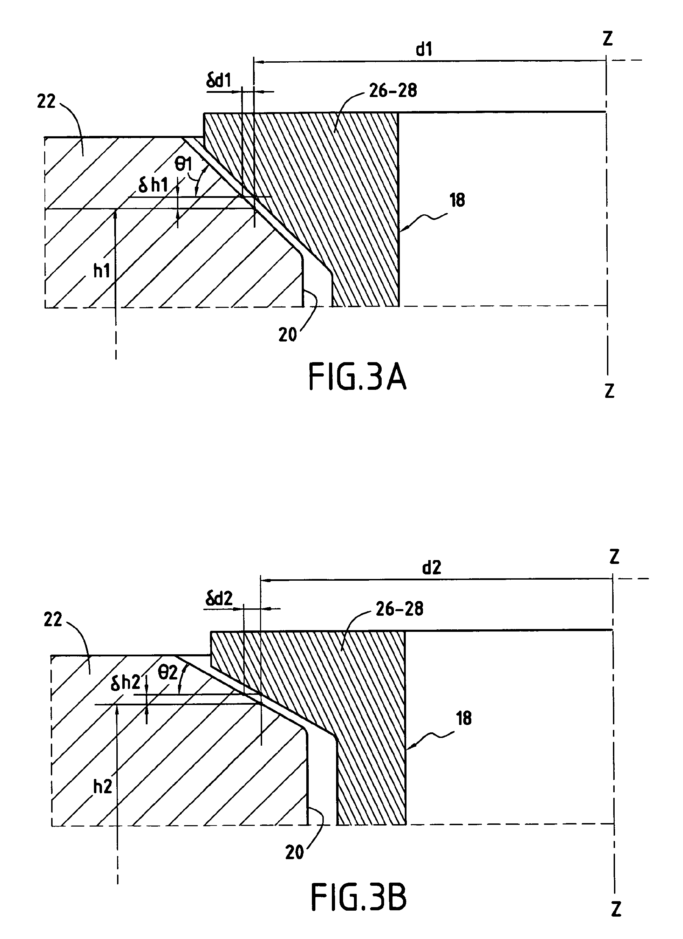

Les figures 3A et 3B illustrent les raisons du choix de la valeur de l'angle d'inclinaison des surfaces coniques définies par les collerettes de la douille.

Sur l'exemple de la figure 3A, le diamètre moyen d1 des collerettes 24, 26 de la douille 18 est choisi comme étant sensiblement identique à la distance longitudinale h1 les séparant.

A partir de ce choix, pour que tout mouvement en écart de dilatation en diamètre δd1 de l'anneau 22 par rapport à la douille 18 soit compensé par l'écart de dilatation en hauteur δh1 de l'anneau, il est nécessaire que l'angle d'inclinaison θ1 des surfaces coniques définies par les collerettes 26, 28 soit de 45°.

Sur l'exemple de la figure 3B, le diamètre moyen d2 des collerettes 24, 26 de la douille 18 est choisi comme étant supérieur à la distance longitudinale h2 les séparant.

En conséquence, pour que tout mouvement en écart de dilatation en diamètre δd2 de l'anneau 22 par rapport à la douille 18 soit compensé par l'écart de dilatation en hauteur δh2 de l'anneau, il est nécessaire que l'angle d'inclinaison θ2 des surfaces coniques définies par les collerettes 26, 28 soit inférieur à 45°.

Ainsi, le choix de la valeur de l'angle d'inclinaison des surfaces coniques définies par les collerettes de la douille dépend du rapport existant entre le diamètre moyen d des collerettes de la douille et la distance longitudinale h les séparant.

Selon une caractéristique avantageuse de l'invention, la douille 18 comporte en outre des moyens pour assurer son anti-rotation dans l'évidement 20 de l'anneau 22 dans lequel la douille est destinée à être montée. Les moyens d'anti-rotation de la douille dans son évidement peuvent revêtir différentes formes.

Ainsi, sur l'exemple de réalisation de ces moyens de la figure 4, le corps tubulaire 24 de la douille 18 comporte, entre les collerettes coniques 26, 30, une protubérance 30 définissant au moins une surface sensiblement plane 31 qui est destinée à coopérer avec une surface complémentaire de l'évidement de l'anneau dans laquelle la douille est destinée à être montée.

Plus précisément, le corps tubulaire 24 de la douille 18 présente quatre faces 31 planes et rectangulaires faisant saillies radialement vers l'extérieur du corps tubulaire par rapport à l'axe longitudinal Z-Z de celui-ci. Ces faces rectangulaires 31 coopèrent avec des faces rectangulaires complémentaires aménagées dans l'évidement de l'anneau.

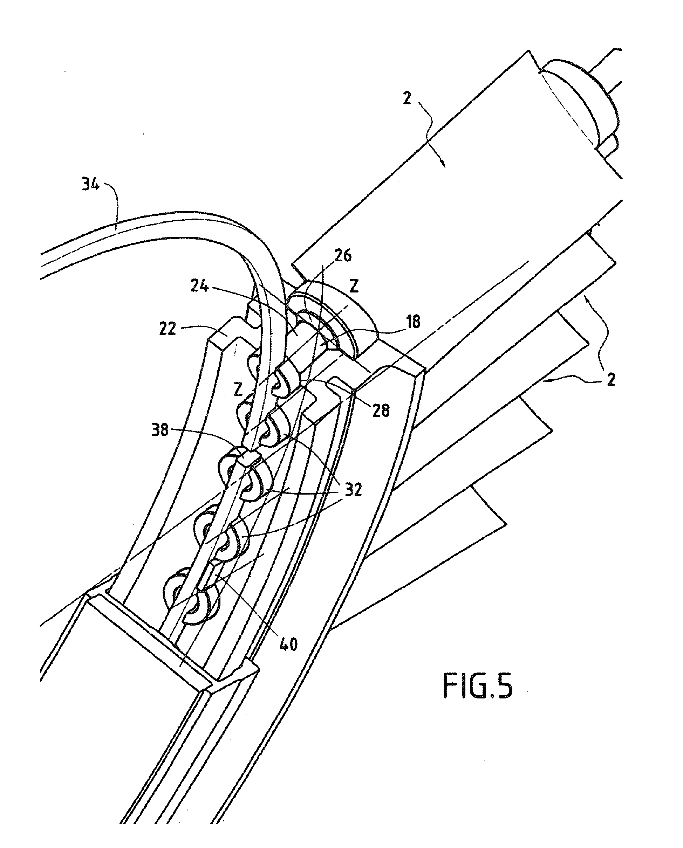

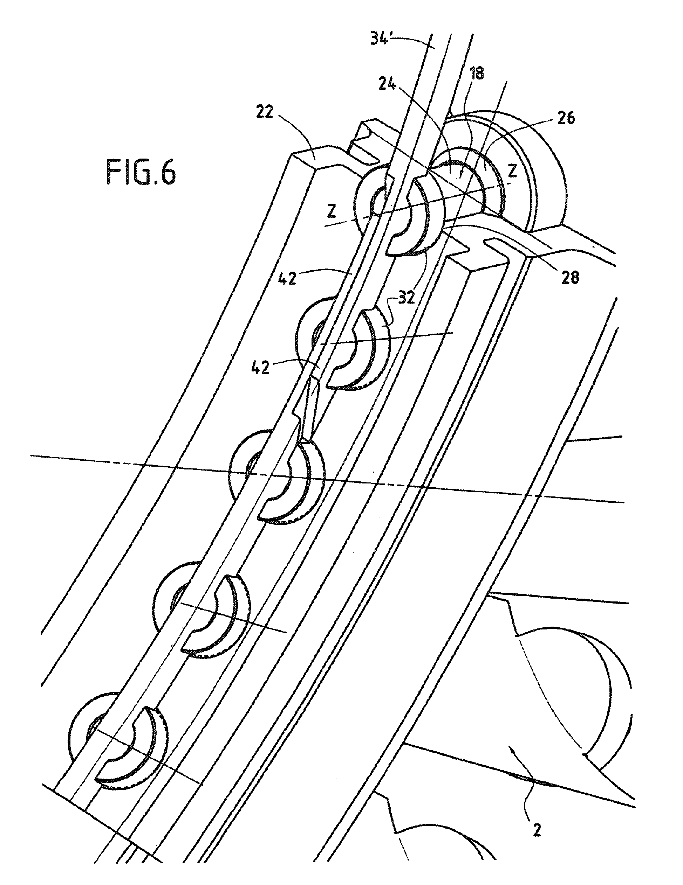

Selon une variante de réalisation des moyens d'anti-rotation illustrée par les figures 5 et 6, l'une des collerettes coniques (ici il s'agit de la seconde collerette 28) présente au moins une excroissance externe 32 s'étendant selon l'axe longitudinal Z-Z de chaque douille. Cette excroissance externe est destinée à coopérer avec un organe d'anti-rotation 34, 34' de la douille 18 dans l'évidement 20 de l'anneau 22.

L'excroissance externe 32 de chaque collerette conique des douilles est plus précisément munie d'une rainure (ou fente) s'étendant dans le sens tangentiel par rapport à l'axe longitudinal de la turbomachine. Un collier d'anti-rotation 34, 34' à section droite sensiblement rectangulaire est monté sur les douilles 18 dans la rainure formée dans ces dernières. Le collier 34, 34' assure ainsi un blocage en rotation des douilles dans leur évidement.

Pour permettre son montage sur les douilles, le collier d'anti-rotation 34, 34' est ouvert. Ainsi, sur l'exemple de réalisation de la figure 5, le collier d'anti-rotation 34 présente une coupure ouverte 38 entre ses deux extrémités libres. Ce mode de réalisation nécessite alors la présence d'un bossage 40 d'arrêt en rotation du collier 34 afin d'éviter que la coupure ouverte 38 ne se trouve au niveau d'une des douilles 18 avec le risque d'un désengagement du collier que cela comporte.

Alternativement (figure 6), le collier d'anti-rotation 34' peut être muni au niveau de ses deux extrémités libres de prolongements 42 dont la section droite est réduite par rapport à celle du collier et qui sont disposés de façon à venir se chevaucher lorsque le collier est monté sur les douilles 18. De la sorte, une fois monté, le collier d'anti-rotation 34' ne présente pas de coupure ouverte. Il en résulte que la présence d'un bossage d'arrêt en rotation du collier n'est pas nécessaire. En outre, l'absence de coupure ouverte améliore la tenue mécanique du collier d'anti-rotation.

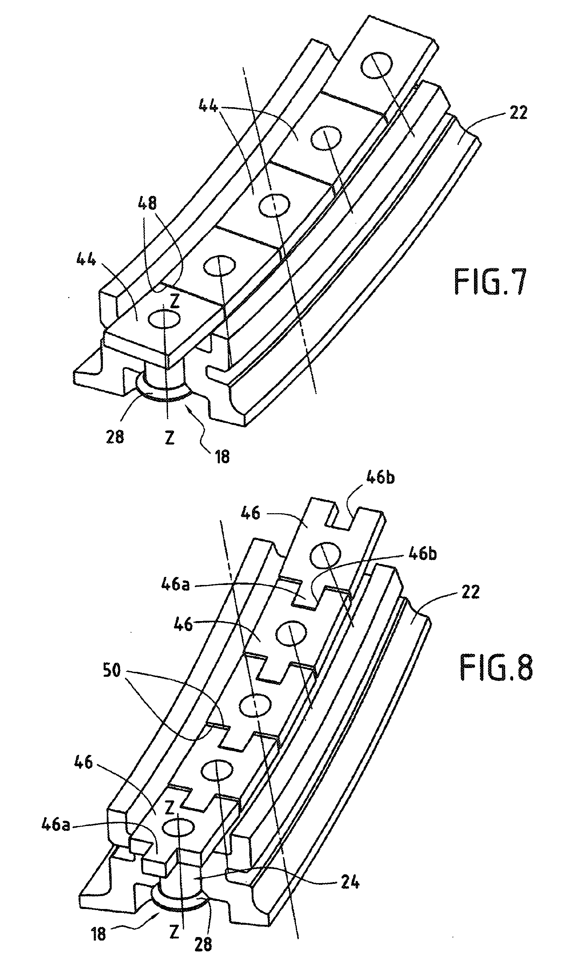

Les figures 7 et 8 représentent d'autres modes de réalisation des moyens d'anti-rotation des douilles dans leur évidement de l'anneau.

Dans ces exemples de réalisation, le blocage en rotation des douilles 18 dans leur évidement de l'anneau 22 est réalisé entre les douilles et non de façon individuelle au niveau de chaque douille.

Pour ce faire, l'une des collerettes coniques 26, 28 d'une douille 18 comporte une platine d'anti-rotation 44, 46 munie d'au moins une surface 48, 50 qui est destinée à établir un contact sensiblement plan avec une surface correspondante 48, 50 d'une platine d'anti-rotation 44, 46 d'une douille adjacente. La platine d'anti-rotation 44, 46 peut être réalisée en une seule pièce avec la collerette conique 26, 28 de la douille.

Sur la figure 7, la platine d'anti-rotation 44 présente une forme sensiblement rectangulaire. De même, dans la variante de réalisation de la figure 8, la platine d'anti-rotation 46 présente aussi une forme sensiblement rectangulaire mais possède également un ergot 46a destiné à venir se loger dans une encoche complémentaire 46b de la platine 46 de la douille adjacente. La présence de l'ergot venant se loger dans une encoche permet d'augmenter les surfaces planes 50 en contact et donc d'accroître l'effet d'anti-rotation.

Par rapport au mode de réalisation de l'anti-rotation des douilles décrit en liaison avec la figure 4, l'utilisation de platines présente l'avantage d'éviter les phénomènes de matage lorsque l'anneau dans lequel sont montées les douilles est en matériau léger (par exemple en aluminium). En effet, grâce à la présence des platines d'anti-rotation, les douilles ne prennent pas appui sur l'anneau (l'appui s'effectue entre les platines des douilles adjacentes).

Bien entendu, d'autres formes sont envisageables pour la réalisation des platines d'anti-rotation. Notamment, les platines peuvent par exemple présenter des aménagements de forme destinés à diminuer leur masse.

## Revendications

1. Douille (18) pour pivot d'aube à angle de calage variable pour turbomachine, la douille (18) étant destinée à être montée dans un évidement (20) d'un anneau (22) de la turbomachine de forme sensiblement complémentaire à celle de la douille et comportant un corps sensiblement tubulaire (24) d'axe longitudinal (Z-Z), **caractérisée en ce que** le corps tubulaire (24) de la douille est muni à une extrémité d'une première collerette conique (26) et à une extrémité opposée d'une seconde collerette conique (28), les surfaces coniques définies par la première et la seconde collerettes (26, 28) étant disposées en regard l'une de l'autre.

2. Douille selon la revendication 1, dans laquelle l'angle d'inclinaison de la surface conique définie par la première collerette (26) est sensiblement identique à celui de la surface conique définie par la seconde collerette (28).

3. Douille selon la revendication 2, dans laquelle l'angle d'inclinaison (θ1, θ2) des surfaces coniques définies par les collerettes (26, 28) est compris entre 30° et 60°.

4. Douille selon la revendication 3, dans laquelle l'angle d'inclinaison (θ1) des surfaces coniques définies par les collerettes (26, 28) est de 45°.

5. Douille selon la revendication 4, dans laquelle le diamètre moyen (d) des collerettes coniques (26, 28) est sensiblement identique à la distance longitudinale (h) les séparant.

6. Douille selon l'une quelconque des revendications 1 à 5, comportant en outre des moyens (30, 32, 34, 44, 46) pour assurer son anti-rotation dans l'évidement (20) de l'anneau (22).

7. Douille selon la revendication 6, dans laquelle le corps tubulaire (24) comporte, entre les collerettes coniques (26, 28), au moins une protubérance (30) définissant une surface (31) sensiblement plane qui est destinée à coopérer avec une surface complémentaire de l'évidement (20) de l'anneau (22) dans laquelle la douille est destinée à être montée de façon à assurer l'anti-rotation de la douille dans ledit évidement.

8. Douille selon la revendication 6, dans laquelle l'une des collerettes coniques (26, 28) présente au moins une excroissance externe (32) sensiblement longitudinale destinée à coopérer avec un organe d'anti-rotation (34, 34') de la douille dans l'évidement (20) de l'anneau (22).

9. Douille selon la revendication 6, dans laquelle l'une des collerettes coniques (26, 28) comporte une platine d'anti-rotation (44, 46) munie d'au moins une surface (48, 50) qui est destinée à établir un contact sensiblement plan avec une surface correspondante d'une platine d'anti-rotation d'une douille adjacente.

10. Douille selon l'une quelconque des revendications 1 à 9, dans laquelle elle est réalisée dans un matériau ayant un coefficient de dilatation thermique différent de celui de l'anneau (22) dans lequel elle est destinée à être montée.

11. Douille selon l'une quelconque des revendications 1 à 10, dans laquelle le corps tubulaire (24) et l'une des collerettes coniques (26, 28) sont deux pièces distinctes.

12. Anneau (22) de turbomachine comportant une pluralité d'évidements (20) destinés chacun à recevoir le pivot de guidage (8) d'une aube (2) à angle de calage variable, **caractérisé en ce qu'**il comporte en outre une pluralité de douilles (18) selon l'une quelconque des revendications 1 à 11 montées chacune dans l'un desdits évidements.

13. Compresseur de turbomachine comportant au moins un anneau (22) selon la revendication 12.

14. Turbomachine comportant au moins un anneau (22) selon la revendication 12.

## Claims

1. A pivot bushing (18) for a variable-pitch vane of a turbomachine, the bushing (18) being for mounting in a recess (20) in a ring (22) of the turbomachine, the shape of the recess being substantially complementary to the shape of the bushing, and the bushing comprising a substantially tubular body (24) about a longitudinal axis (Z-Z), the bushing being **characterized in that** the tubular body (24) of the bushing is provided at one end with a first conical collar (26) and at an opposite end with a second conical collar (28), the conical surfaces defined by the first and second collars (26, 28) being disposed facing each other.

2. A bushing according to claim 1, in which the angle of inclination of the conical surface defined by the first collar (26) is substantially identical to the angle of inclination of the conical surface defined by the second collar (28).

3. A bushing according to claim 2, in which the angle of inclination (θ1, θ2) of the conical surfaces defined by the collars (26, 28) lies in the range 30° to 60°.

4. A bushing according to claim 3, in which the angle of inclination (θ1) of the conical surfaces defined by the collars (26, 28) is 45°.

5. A bushing according to claim 4, in which the mean diameter (d) of the conical collars (26, 28) is substantially identical to the longitudinal distance (h) between them.

6. A bushing according to any one of claims 1 to 5, further including means (30, 32, 34, 44, 46) for preventing it from turning in the recess (20) in the ring (22).

7. A bushing according to claim 6, in which the tubular body (24) includes, between the conical collars (26, 28), at least one projection (30) defining a substantially plane surface (31) for co-operating with a complementary surface of the recess (20) in the ring (22) in which the bushing is to be mounted so as to prevent the bushing from turning in said recess.

8. A bushing according to claim 6, in which one of the conical collars (26, 28) presents at least one substantially longitudinal external projection (32) for co-operating with a member (34, 34') for preventing the bushing from turning in the recess (20) in the ring (22).

9. A bushing according to claim 6, in which one of the conical collars (26, 28) includes an anti-rotation plate (44, 46) provided with at least one surface (48, 50) for establishing substantially plane contact with a corresponding surface of an anti-rotation plate of an adjacent bushing.

10. A bushing according to any one of claims 1 to 9, in which the bushing is made of a material having a coefficient of thermal expansion that is different from that of the ring (22) in which the bushing is to be mounted.

11. A bushing according to any one of claims 1 to 10, in which the tubular body (24) and one of the conical collars (26, 28) are two distinct parts.

12. A turbomachine ring (22) including a plurality of recesses (20) each for receiving a guide pivot (8) of a variable-pitch vane (2), the ring being **characterized in that** it further includes a plurality of bushings (18) according to any one of claims 1 to 11, each mounted in a respective one of said recesses.

13. A turbomachine compressor including at least one ring (22) according to claim 12.

14. A turbomachine including at least one ring (22) according to claim 12.

## Patentansprüche

1. Buchse (18) für die Drehachse einer Schaufel mit variablem Anstellwinkel für eine Turbomaschine, wobei die Buchse (18) dazu bestimmt ist, in einer Ausnehmung (20) eines Rings (22) der Turbomaschine mit einer zur Form der Buchse im wesentlichen komplementären Form angebracht zu werden, und die einen im wesentlichen rohrförmigen Körper (24) mit der Längsachse (Z-Z) umfaßt, **dadurch gekennzeichnet, daß** der rohrförmige Körper (24) der Buchse an einem Ende mit einem ersten konischen Kragen (26) und an einem gegenüberliegenden Ende mit einem zweiten konischen Kragen (28) versehen ist, wobei die durch den ersten und den zweiten Kragen (26, 28) definierten Kegelflächen einander gegenüberliegend angeordnet sind.

2. Buchse nach Anspruch 1, wobei der Neigungswinkel der durch den ersten Kragen (26) definierten Kegelfläche mit demjenigen der durch den zweiten Kragen (28) definierten Kegelfläche im wesentlichen identisch ist.

3. Buchse nach Anspruch 2, wobei der Neigungswinkel (θ1, θ2) der durch die Kragen (26, 28) definierten Kegelflächen zwischen 30° und 60° liegt.

4. Buchse nach Anspruch 3, wobei der Neigungswinkel (θ1) der durch die Kragen (26, 28) definierten Kegelflächen 45° beträgt.

5. Buchse nach Anspruch 4, wobei der mittlere Durchmesser (d) der konischen Kragen (26, 28) im wesentlichen identisch ist mit dem sie voneinander trennenden Längsabstand (h).

6. Buchse nach einem der Ansprüche 1 bis 5, die ferner Mittel (30, 32, 34, 44, 46) umfaßt, um ihre Verdrehsicherung in der Ausnehmung (20) des Rings (22) zu gewährleisten.

7. Buchse nach Anspruch 6, wobei der rohrförmige Körper (24) zwischen den konischen Kragen (26, 28) wenigstens einen Vorsprung (30) aufweist, der eine im wesentlichen ebene Fläche (31) definiert, die dazu bestimmt ist, mit einer ergänzenden Fläche der Ausnehmung (20) des Rings (22), in der die Buchse angebracht werden soll, zusammenzuwirken, um die Verdrehsicherung der Buchse in der Ausnehmung zu gewährleisten.

8. Buchse nach Anspruch 6, wobei der eine der konischen Kragen (26, 28) wenigstens eine im wesentlichen längliche äußere Ausstülpung (32) aufweist, die dazu bestimmt ist, mit einem Organ zur Verdrehsicherung (34, 34') der Buchse in der Ausnehmung (20) des Rings (22) zusammenzuwirken.

9. Buchse nach Anspruch 6, wobei der eine der konischen Kragen (26, 28) eine Verdrehsicherungsplatte (44, 46) aufweist, die mit wenigstens einer Fläche (48, 50) versehen ist, welche dazu bestimmt ist, einen im wesentlichen flächigen Kontakt mit einer entsprechenden Fläche einer Verdrehsicherungsplatte einer benachbarten Buchse herzustellen.

10. Buchse nach einem der Ansprüche 1 bis 9, wobei sie aus einem Material gefertigt ist, das einen anderen Wärmeausdehnungskoeffizienten als der Ring (22), in dem sie angebracht werden soll, aufweist.

11. Buchse nach einem der Ansprüche 1 bis 10, wobei der rohrförmige Körper (24) und der eine der konischen Kragen (26, 28) zwei getrennte Teile sind.

12. Ring (22) einer Turbomaschine, der eine Vielzahl von Ausnehmungen (20) aufweist, die jeweils dazu bestimmt sind, die Führungsdrehachse (8) einer Schaufel (2) mit variablem Anstellwinkel aufzunehmen, **dadurch gekennzeichnet, daß** er ferner eine Vielzahl von Buchsen (18) nach einem der Ansprüche 1 bis 11 umfaßt, die jeweils in einer der Ausnehmungen angebracht sind.

13. Verdichter einer Turbomaschine, der wenigstens einen Ring (22) nach Anspruch 12 umfaßt.

14. Turbomaschine, die wenigstens einen Ring (22) nach Anspruch 12 umfaßt.
